# EUROPEAN PATENT APPLICATION

(11) **EP 4 686 020 A1**
(43) Date of publication of application: **28.01.2026**
(21) Application number: 25190951.1
(22) Date of filing: 22.07.2025
(51) Int. Cl.: H02G 11/00, B60L 53/66, B60L 53/65, E01F 1/00, B60L 53/10, B60L 53/37, B60L 53/16, B60L 53/36, B60L 53/18, B60L 53/31, B60L 53/30, E01F 15/00

(54) **DROP AND PLAY ELECTRIC VEHICLE CHARGING SYSTEM**

(30) Priority: 23.07.2024 US 202463674451 P; 17.07.2025 US 202519272382
(71) Applicant: DS2.0, LLC, Portland, TN 37148 (US)
(72) Inventor: SOLON, Dean, Gallatin / TN, 37066 (US)
(74) Representative: Fish & Richardson P.C.

(57) **Abstract**

Systems and apparatus for implementing a drop and play electric vehicle charging system. In one aspect, a system includes a base plate; at least one parking barrier connected to the base plate; an electric vehicle charging device; and a boom configured to suspend a charging cable above the base plate.

## Description

This application claims priority to U.S. Provisional Application No. 63/674,451, filed on July 23, 2024.

### BACKGROUND

This specification relates to charging systems, such as electric vehicle (EV) charging systems. An electric vehicle charging system provides electric energy to recharge the battery of an electric vehicle. A charging port physically connects to the car and enables power to flow to the EV battery by way of a cord that connects the EV charging port to a charger of the EV charging system.

### SUMMARY

In general, one innovative aspect of the subject matter described in this specification can be embodied in a system that includes a base plate; at least one parking barrier connected to the base plate; an electric vehicle charging device; and a boom configured to suspend a charging cable above the base plate. The system can be an electric vehicle charging system.

Other embodiments of this aspect include corresponding methods and apparatus. These and other embodiments can each optionally include one or more of the following features. the at least one parking barrier is pivotably connected to the base plate to facilitate a transition between transport mode and installation mode.

The at least one parking barrier can include a plurality of parking barriers. A first parking barrier among the plurality of parking barriers can be a bollard that is pivotally attached to the base plate. A second parking barrier among the plurality of parking barriers can be a parking block.

The parking block can be attached to the base plate by a set of fasteners. The parking block can be attached to the base plate by an adhesive.

The system can include a support column attached to the base plate, wherein the electric vehicle charging device is attached to the support column.

The boom can be attached to the support column. The boom can be pivotably attached to the support column.

The system can include a charging cord that is electrically connected to the electric vehicle charging device.

The support column can have an access port defined therein. The charging cord can be routed through the access port.

The boom can include a set of festoon trolleys. The charging cord can be routed through the set of festoon trolleys.

The support column can have two or more sections that are pivotably attached to each other. A first section of the support column can be pivotably attached to the base plate.

The base plate can include a set of rolling components configured to facilitate movement of the base plate on the ground.

The support column can include a charging port storage receptable configured to receive a charging port that is connected to the charging cord.

The boom can be configured to autonomously move toward a stowed state at rest. The boom can be configured to autonomously move toward the stowed state at rest by having one or more springs connected to at least one segment of the boom. The boom can be configured to autonomously move toward a stowed state at rest by having a configuration that causes an imbalanced moment that biases one or more segments of the boom toward the stowed state.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is an illustration of a vehicle connected to an EV charging station.
FIGs. 2A-2H are illustrations of an example drop and play electric vehicle charging system.
FIG. 3 is a top view of the drop and play electric vehicle charging system.
FIG. 4 is a top view of another drop and play electric vehicle charging system.
FIG. 5 is a top view of another drop and play electric vehicle charging system.
FIG. 6 is a top view of another drop and play electric vehicle charging system.
FIG. 7A is an illustration of an example drop and play electric vehicle charging system in transport mode.
FIG. 7B is an illustration of the example drop and play electric vehicle charging system being transitioned into installation mode.
FIG. 8 is a top view of another example drop and play electric vehicle charging system in transport mode.
FIG. 9 is an illustration of an example charging cable support mounted on top of a charging station.
FIG. 10 is an illustration of the cable support.
FIGs. 11A and 11B are top views of another drop and play electric vehicle charging system.

Like reference numbers and designations in the various drawings indicate like elements.

### DETAILED DESCRIPTION

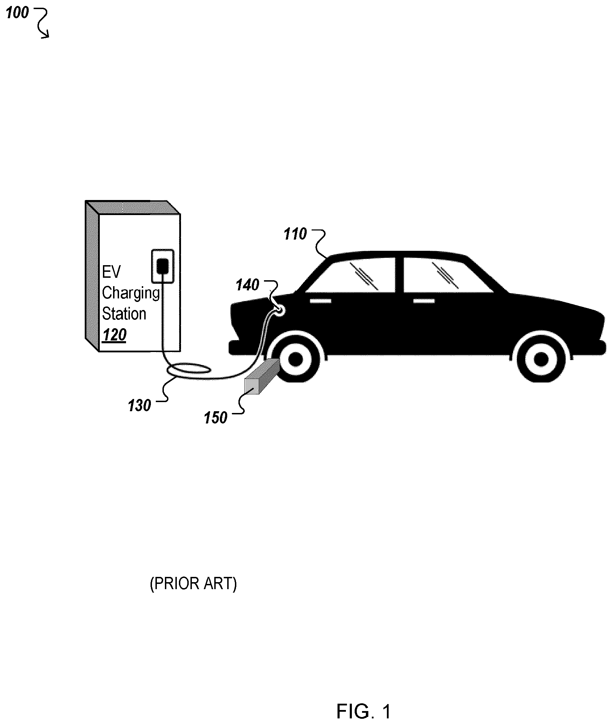

FIG. 1 is an illustration 100 of an electric vehicle (EV) 110 connected to an EV charging station 120, also referred to as an EV charger or charging station. As shown, the charging station 120 has a charging cord 130 that connects to a charging port 140 of the charging station 120. The charging port 140 is configured to physically connect the charging station 120 to the EV 110.

Usually, the charging cord 130 is very long (e.g., the length of the vehicles intended to be charged) so that the charging port 140 at the end of the charging cord 130 can reach a charging receptacle of the vehicle that receives the charging port 140 of the charging station 120. For example, while the EV 110 is shown with the charging port 140 connected at an end of the EV 110 that is closest to the charging station 120, the charging cord 130 is generally long enough to reach the opposite end of the EV 110 so that the charging port 140 can still be connected to the EV 110 if its charging receptacle was located at the other end of the EV 110, or the EV 110 pulled into the parking space in the opposite direction. Furthermore, a parking block 150 can be used to maintain a safe distance between the EV 110 and the charging station 120, which increases the length of the charging cord 130 that is needed to ensure the charging port 140 can reach the charging receptacle of the EV 110.

This often results in portions of the charging cord 130 being placed on the ground, either strewn about, or piled up, which creates a significant tripping hazard to people walking, or otherwise moving about, near the exposed charging cord 130. This tripping hazard is exacerbated when the charging port 140 of the EV charging station 120 is not properly stowed after use. For example, if the charging port 140 is simply placed on the ground when charging is completed, the charging cord 130 may create a larger tripping zone.

A parking block 150 is a device generally used to indicate the proper parking spot for a vehicle and maintain a safe distance between the vehicle and other objects, such as walls, buildings, walkways and charging stations. The parking block 150 can be made of concrete, plastic, rubber, or another appropriate rigid material, and is placed along the edge of a parking space to physically prevent a vehicle from rolling over the curb or into another space. The parking block 150 can be secured to the ground using anchor bolts. For example, the parking block 150 can be drilled and then bolted to the surface of the pavement or concrete using concrete anchors. The anchors often include a threaded rod, typically made of steel, that is embedded into the concrete, with a nut and washer on the end to hold the block in place. Once installed, the parking block 150 is generally not movable, and the charging cord 130 is often laid over the parking block 150 when the charging port 140 is attached to the EV 110, which increases the trip hazard of the charging cord 130 because it is now elevated off the ground, rather than laying flat on the ground.

In addition to the tripping hazards caused by existing charging stations, the process of installing a charging station is laborious, time consuming, and can result in damage to the asphalt/concrete at the installation location. For example, the EV charging station 120 is typically secured to the asphalt/concrete using anchors, such as the threaded rods discussed above. It takes a significant amount of time and skill to drill the hole needed for the threaded rod, and any time that the surface of the asphalt/concrete is penetrated, it reduces the durability of the asphalt/concrete. For example, the act of drilling into the asphalt/concrete can immediately cause cracks in the asphalt/concrete, and even if the cracks do not form immediately, the damage to the asphalt/concrete caused by the drilling increases the likelihood that cracks will form in the future. Furthermore, specialized tools are required to drill into the asphalt/concrete, and the installation team must be trained to use the specialized tools.

As discussed throughout this document, the use of "drop and play" EV charging system can reduce (i) the trip hazards caused by charging cords that are laying on the ground and (ii) the damage caused to asphalt/concrete caused by the installation of traditional EV charging stations. The drop and play EV charging system includes a base plate upon which components of the EV charging station are installed. As discussed in detail below, the drop and play EV charging system can be delivered to the installation site in a pre-configured state, such that the installation is completed by securing the base plate to the asphalt/concrete. In some implementations, the base plate is secured using an adhesive so that no holes need to be drilled in the asphalt/concrete, thereby maintaining the durability of the asphalt/concrete. Furthermore, the drop and play EV charging system can include a cable management element, such as a festoon system, that prevents the charging cord from being strewn about the ground, thereby reducing the tripping hazards of prior EV stations.

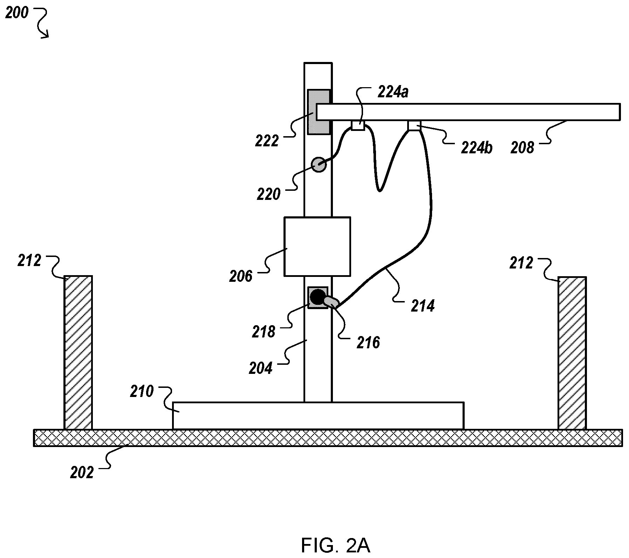

FIGs. 2A-2C are illustrations of an example drop and play electric vehicle charging system 200. The EV charging system 200 includes a base plate 202 to which various components are attached. The base plate 202 can be steel, aluminum, plastic, rubber, or another appropriate rigid material. The base plate 202 can take various dimensions, but for purposes of example, the base plate 202 can be assumed to be a 4' x 8' rectangle. Of course, the base plate 202 can be other shapes and sizes.

The components attached to the base plate 202 can include a support column 204 that is configured to support or integrate an electric vehicle charging device 206 and a boom 208. The support column can be steel, aluminum, plastic, rubber, wood, or another appropriate rigid material.

One or more parking barriers can also be attached to the base plate 202. For example, as illustrated, the EV charging system 200 includes a parking block 210 and two bollards 212, for a total of three parking barriers. Each of the parking barriers is configured to maintain a safe distance between a vehicle and the electric vehicle charging device 206, thereby preventing damage to the EV charging device 206. The parking barriers can be made from steel, aluminum, plastic, rubber, concrete, wood, or another appropriate material. In some implementations, the parking barriers are secured to the base plate 202 using fasteners. For example, holes can be drilled through the base plate 202, and bolts can be used to attach the parking barriers to the base plate. In some implementations, an adhesive can be used to secure the parking barriers to the base plate 202. The adhesive can be an anchoring adhesive that can include a combination of ingredients that create a strong bond. For example, the adhesive can be a combination of quartz (SiO2) and vinyltoluene, which creates a bond stronger than concrete once cured.

The electric vehicle charging device 206 can be any appropriate charging device. For example, the EV charging device 206 can be a level 1, level 2, or level 3 charger. The EV charging device 206 can be secured to the support column 204 using bolts (or other fasteners), adhesive, or a mounting bracket. A charging cord 214 is electrically connected to the EV charging device 206, and a charging port 216 is connected to the end of the charging cord 214. The charging port 216 can be any appropriate EV connector interface. For example, depending on the geography and the charging level, the connector interface 802 can be selected from among the following types of EV charging interfaces:
1. J1772 Connector: This is a Level 2 charging connector that is used in North America, and it provides up to 240V of power. It features a standard five-pin configuration and is compatible with many EVs on the market.
2. CCS Connector: This is a Combined Charging System connector that can support both Level 2 and DC fast charging. It features a two-pin DC charging connector that is located below the Level 2 charging connector. The CCS connector is commonly used in North America, Europe, and Asia.
3. CHAdeMO Connector: This is a Level 3 DC fast charging connector that is primarily used in Japan and Europe. It features a unique design that includes a large, circular connector with two small pins at the bottom.
4. Tesla Connector: This is a proprietary charging connector used exclusively by Tesla vehicles. It supports Level 2 and Level 3 DC fast charging and features a unique six-pin configuration.
5. Type 2 Connector: This is a European standard charging connector that supports both Level 2 and DC fast charging. It features a seven-pin configuration and is commonly used in Europe.
6. GB/T Connector: This is a Chinese national standard charging connector that supports both Level 2 and DC fast charging. It features a nine-pin configuration and is commonly used in China.

The charging port 216 is plugged into a charging port storage receptable 218, which is configured to receive the charging port 216. The charging port storage receptacle 218 provides a storage location for the charging port 216 when the charging port 216 is not in use, and can also help prevent the charging cord 214 from being on the ground. As shown, the charging port receptacle 216 is shown as being formed in the support column 204, but the charging port receptacle 216 could also be formed in the EV charging device 206.

The EV charging system 200 also provides enhanced cord management by routing the charging cord 214 through the support column 204 to a location near the boom 208. As shown, an access port 220 (e.g., a hole) is defined in the support column 204, and the charging cord 214 is routed through the access port 220 to a location behind the EV charging device 206, where the charging cord 214 is electrically connected to the EV charging device 206.

The boom 208 is attached to the support column 204 at a boom interface 222. In some implementations, the boom interface 222 can be a hinge or another hardware device that pivotably attaches the boom 208 to the support column 204, which enables the boom to rotate relative to the support column 204. As shown, the boom 208 includes a set of festoon trolleys 224a and 224b, and the charging cord 214 is routed through the set of festoon trolleys 224a and 224b. The set of festoon trolleys 224a and 224b can be wire-rope-travel hoist cable trolleys, beam-travel hoist cable trolleys, channel-travel hoist cable trolleys, or another type of trolley.

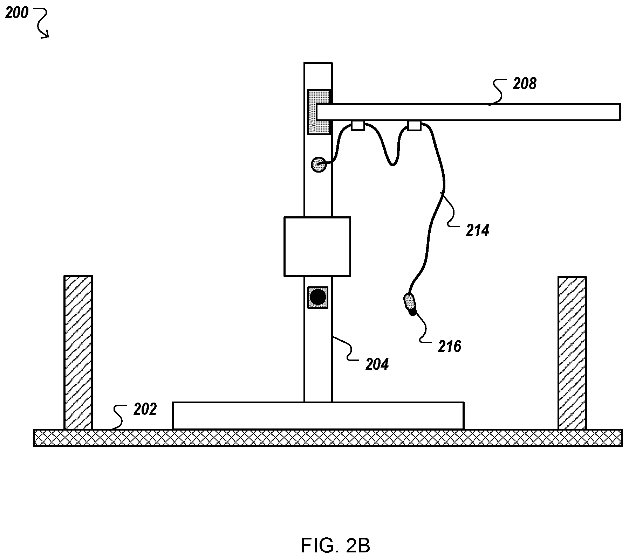

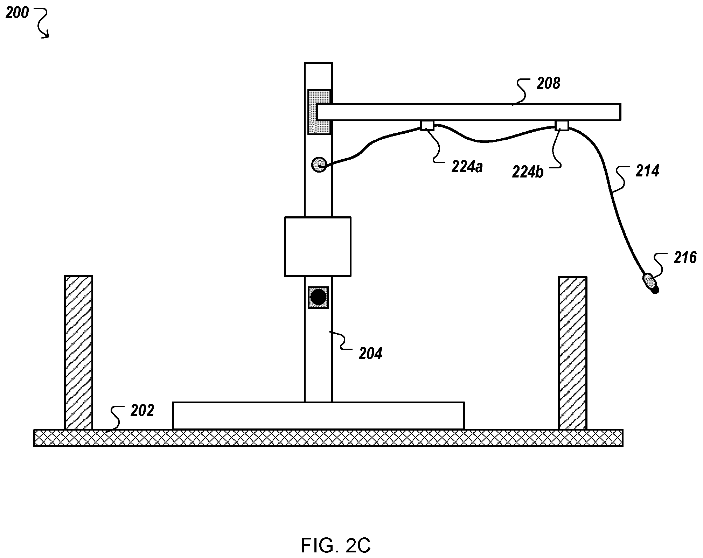

Routing the charging cord 214 through the set of festoon trolleys 224a and 224b allows the location of the charging port 216 to be adjusted toward and away from the support column 204 and EV charging device 206, while elevating/suspending the charging cord above the base plate 202. In this way, the EV charging system 200 eliminates the tripping hazards caused by the charging cable 214 being strewn across the ground. For example, as shown in FIGs. 2B and 2C, as the charging port 216 is moved away from the support column 204, the set of festoon trolleys 224a and 224b will slide further out on the boom 208, keeping the charging cord 214 off the ground. Meanwhile, when the charging port 216 is moved back toward the support column 204, the set of festoon trolleys 224a and 224b will slide along the boom 208 toward the support column, while still keeping the charging cord 214 suspended above the base plate 202.

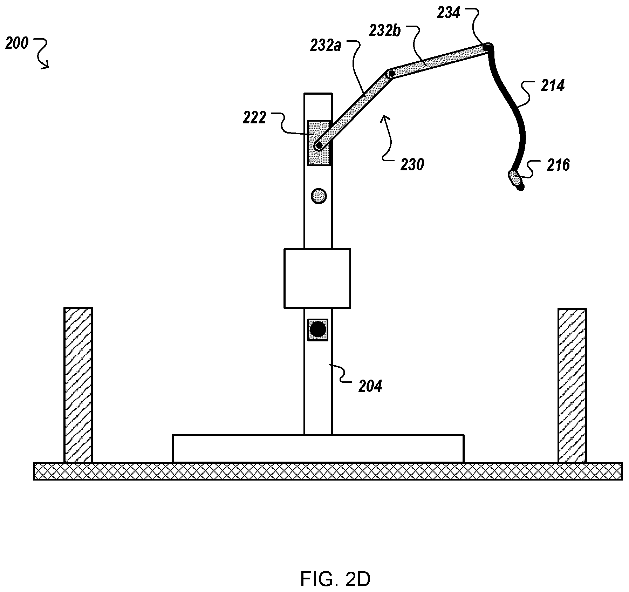

Although a boom 208/festoon trolleys 224a configuration is described as an example mechanism for relocating the charging port 216 and supporting the charging cable 214, other mechanisms can be used. For example, as shown in FIG. 2D, a mechanical arm 230 can be used to support the charging cable above the ground (e.g., overhead) and relocate the charging port 216 relative to the support column 204 and/or and EV to be charged.

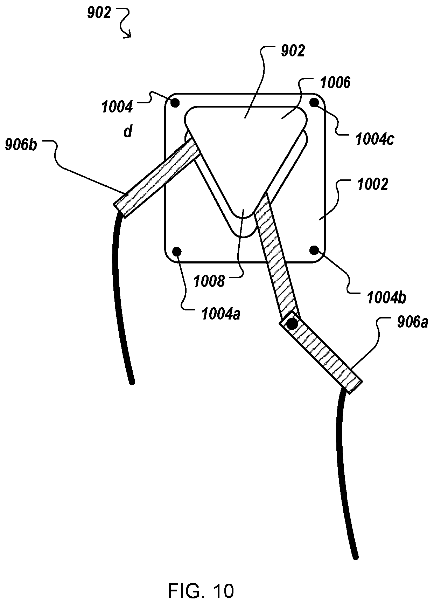

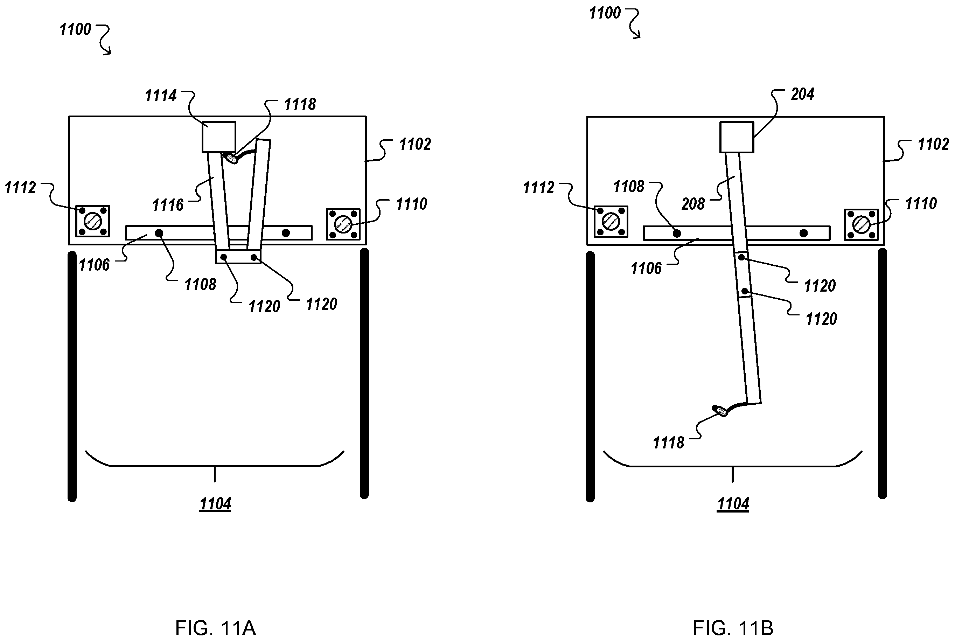

Furthermore, the boom 208 can be configured to autonomously pivot toward the base plate 202 when the charging port 216 is not in use. For example, one or more springs can be connected between the boom 208 and the support column 204, such that when sufficient force is not exerted on the boom 208 to stretch the spring(s), the boom 208 will move toward the base plate 202 (e.g., away from a location of an EV parked in front of the charging system 200). In some implementations, the boom 208 can be formed to have a center of gravity that causes an imbalanced moment, which causes the boom 208 to move to a stowed state (e.g., a resting position) when sufficient force is not exerted on the boom 208. Various example boom configurations are shown in FIGs. 10A-10C and 11A-11B. In each example, springs or center of gravity designs can be used to predispose the segments of the boom to move toward a stowed/resting state when force is not exerted to extend the segments of the boom. In other words, the springs and/or the imbalanced moment bias the segments of the boom toward the stowed state (e.g., when at rest).

As shown in FIG. 2D, the mechanical arm 230 has multiple extension members 232a and 232b, which can also be referred to as "links" or "segments" of the mechanical arm 230 The extension members 232a and 232b can be attached to one another through various types of joints such as rotary or linear joints to form the mechanical arm 230. The number and type of links used in a mechanical arm depend on the intended use and required range of motion. FIG. 2D shows the mechanical arm 230 implemented with two extension members 232a and 232b that are pivotally attached to each other, and to the boom interface 222/support column 204. Additional components can be attached to the extension members 232a and 232b to provide the mechanical arm 230 with the ability to perform specific tasks. For example, as discussed in more detail below, an EV charging port (and/or other components) and/or sensors can be integrated into or attached to an end link (e.g., extension member 232b) of a mechanical arm 230 so that the mechanical arm 230 can insert the charging port into the charging receptacle of the EV.

In FIG. 2D, the mechanical arm 230 is configured to route the charging cord 214 from the support column 204 to an arm access port 234 of the mechanical arm 230. The arm access port 234 can be formed as a void in the surface of the extension member 232b through which the charging cord 214 passes to make the charging cord 214 accessible and maneuverable by a person connecting the charging port 216 to the charging receptacle of the EV. In some implementations, the arm access port 234 can be a connectorized port of the mechanical arm. That is, the arm access port 234 can have a connector to which a mating connector of the charging cord 214 can be connected. For example, depending on the geography and the charging level, the connector of the arm access port 234 can be selected from among the following types of connectors:
1. J1772 Connector: This is a Level 2 charging connector that is used in North America, and it provides up to 240V of power. It features a standard five-pin configuration and is compatible with most EVs on the market.
2. CCS Connector: This is a Combined Charging System connector that can support both Level 2 and DC fast charging. It features a two-pin DC charging connector that is located below the Level 2 charging connector. The CCS connector is commonly used in North America, Europe, and Asia.
3. CHAdeMO Connector: This is a Level 3 DC fast charging connector that is primarily used in Japan and Europe. It features a unique design that includes a large, circular connector with two small pins at the bottom.
4. Tesla Connector: This is a proprietary charging connector used exclusively by Tesla vehicles. It supports Level 2 and Level 3 DC fast charging and features a unique six-pin configuration.
5. Type 2 Connector: This is a European standard charging connector that supports both Level 2 and DC fast charging. It features a seven-pin configuration and is commonly used in Europe.
6. GB/T Connector: This is a Chinese national standard charging connector that supports both Level 2 and DC fast charging. It features a nine-pin configuration and is commonly used in China.

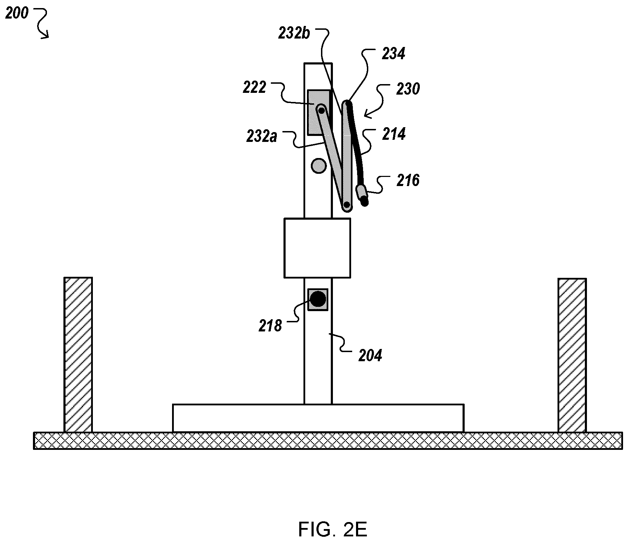

In some implementations, the mechanical arm can be configured to be stowed, for example, as shown in FIG. 2E. In the stowed state, the extension members 232a and 232b are in a retracted position, such that the charging cord 214 is closer to the support column 204 than it was in the active state shown in FIG. 2D. More specifically, in this implementation, the mechanical arm 230 is configured such that the extension members 232a and 232b can be folded up in an accordion fashion. For example, the extension member 232a is pivotally/rotationally connected to the support column 204/boom interface 222 so that the extension member 232a can fold down (or up), which causes the full length (and/or distal end of the extension member 232a connected to the extension member 232b) of the extension member 232a to be closer to the support column 204/boom interface 222 than it was in the active state shown in FIG. 2D. Similarly, the extension member 232b is pivotally/rotationally connected to the extension member 232a, such that the extension member 232b can fold in closer to each of the extension member 232a and the support column 204/boom interface 222.

In some implementations, the stowing (e.g., folding or other retracting) of the extension members 232a and 232b can be performed manually. In some implementations, the stowing can be performed by hydraulics, a motor, or appropriate electronic mechanisms. For example, the transition from one state (e.g., active state) to another state (e.g., stowed state) can be initiated in response to the mechanical arm 230, or another component including control circuitry, such as one or more processors, detecting user interaction with a change state button. More specifically, interaction with a "close" button or "open" button can be detected, and in response, the movement (e.g., folding or unfolding) of the mechanical arm 230 can be initiated. Movement of the mechanical arm 230 can be halted when the mechanical arm 230 has completed a state change (e.g., the mechanical arm 230 reaches the active state or the stowed state).

The mechanical arm 230 can also be configured to include circuitry that detects when the charging port has been removed from the charging receptacle of the EV, and initiate a transition to the stowed state in response to detecting that the charging port has been physically removed from the charging receptacle. For example, the mechanical arm 230 can include an open circuit sensor that triggers a state change signal when an open circuit exists at the charging port 216. Additionally, or alternatively, the mechanical arm 230 can include a mechanical storage interface (not shown) that is configured to receive the charging port 216, and detect when the charging port 216 is inserted into a charging port storage receptable 218 (e.g., a mechanical storage interface). When the charging port 216 is detected in the charging port storage receptable 218 (e.g., by control circuitry), the state change signal can be generated. The state change signal can cause a motor to begin retracting and/or folding the mechanical arm 230 until it reaches the stowed state (e.g., as shown in FIG. 2E).

When the mechanical arm 230 reaches the stowed state, the arm access port 234 can be elevated relative to an opposite end of the extension member 232b, which reduces the amount of the charging cord 214 that may come in contact with the ground, and may prevent the charging cord 214 and charging port 234 from contacting the ground completely depending on the length of the charging cord 214 and the length of the extension member 232b. For example, a length of the extension member 232b can be selected so that the length of the charging cord 214 is equal to or shorter than the length of the extension member 232b. Similarly, the length of the extension member 232b can be selected so that the height of the arm access port 234 from the ground in the stowed state is greater than (or equal to) the length of the charging cord 214.

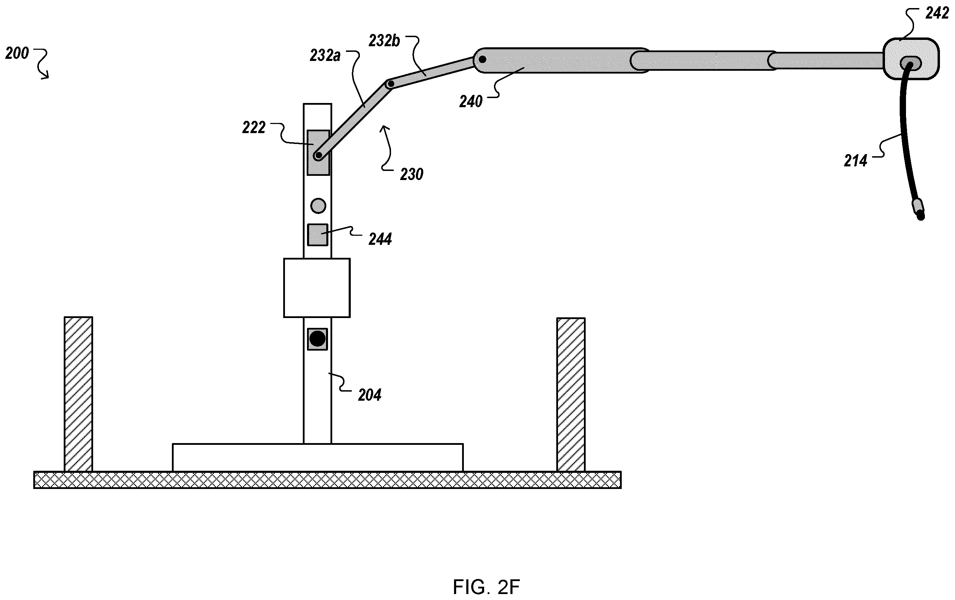

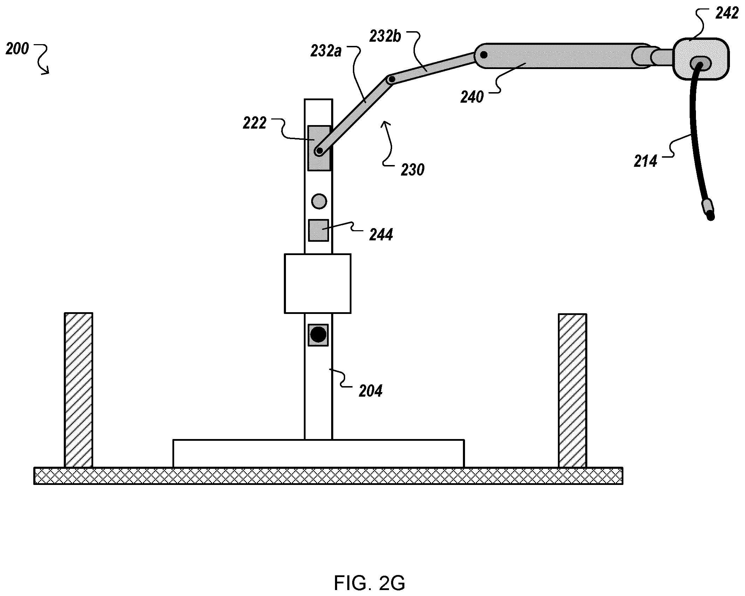

FIGs. 2F and 2G are illustrations of the mechanical arm 230 having a telescoping member 240, also referred to as a telescoping portion, attached. In FIG. 2F, the telescoping member 240 is shown in an extended (e.g., active) state that positions the charging cord 214 closer to (e.g., proximate to) the charging receptacle of an EV (e.g., further from the support column 204). In some implementations, the telescoping member 240 can be extended/deployed when requested by a user (e.g., by pushing a "start" button" or being authorized to begin charging an EV. For example, in response to the user being authorized to begin charging (e.g., by submitting charging account credentials), control circuitry that is part of, or in communication with, the mechanical arm 230 can extend the telescoping member 240 so that a cord dispenser 442 is located over (e.g., within a specified distance of) the location of the charging receptacle of the EV, which may be located in the back section of the EV. As part of adjusting the location of the cord dispenser 442 to the location over the charging receptacle, one or both of the extension members 232a and 232b can be extended as well. For example, the extension members 232a and 232b can be moved (e.g., unfolded) from their stowed state, discussed with reference to FIG. 2D, to an active state in which the extension members 232a and 232b are moved into a more extended, rather than folded, orientation.

In some implementations, the mechanical arm 230 is configured to adjust the location of the cord dispenser 242 based on characteristics of the EV to be charged, and moving the mechanical arm 230 to a specified position based on the characteristics of the EV to be charged. For example, control circuitry included in, or in communication with, the mechanical arm 230 can identify/obtain characteristics of the EV to be charged, such as, information indicating a vehicle type of the EV and/or other characteristics of the EV. The information can be obtained, for example, through user input to a user interface of the EV charging station (or the mechanical arm 230). For example, when the user arrives at the EV charging station 120, the user can input a make/model/model year of the EV to be charged. Similarly, when the user arrives, a camera can be used in combination with image recognition models to determine the make/model/year of the EV to be charged.

Additionally, or alternatively, the information can be obtained through communications with the EV to be charged, a mobile application on the user's mobile device, or another manner of communications. For example, the EV can be equipped with wireless communication equipment that can interface with electronics of the EV charging system 200 (or other electronics) when the EV arrives at the EV charging system 200 (e.g., enters the communication range of the EV charging system 200. In a specific example, the EV charging system 200 can be equipped with a wireless communication device 244 that can broadcast its identity to nearby devices. In this example, the nearby devices (e.g., EV or a mobile device running a specified app) can detect the broadcast message when the devices enter a given physical area, identify the EV charging station's capabilities, and transmit information about the EV to the EV charging system 200.

In some implementations, control circuitry can perform a database search using the received information to identify a location of the charging receptacle on the EV identified to be charged, electrical charging parameters of the EV, or other information that can be used to customize the charging experience for the user. The information could be directly provided by the EV in some situations.

In response to obtaining the information about the EV, the EV charging system 200 can adjust charging parameters to match the charging needs of the EV and/or move the mechanical arm 230 into a specified position so that the dispensing location of the charging cord 214 (e.g., where the charging cord exits the mechanical arm 230 and/or the location of the charging port) is closer to (e.g., within a specified distance of) the charging receptacle of the EV. For example, assume that the control circuity determines that the charging receptacle of the EV is located in a back, driver's side, portion of the EV. In this example, the control circuitry can cause the mechanical arm 230 to position the cord dispenser 242 over (or otherwise within a specified distance of) the location of the charging receptacle of the EV. Additionally, the control circuity can cause the cord dispenser 242 to dispense a specified amount of the charging cord 214 so that the user can grab the charging cord 214 and insert the charging cord 214 into the charging receptacle of the EV.

In another example, as shown in FIG. 2G, assume that the control circuity determines, based on the obtained information, that the charging receptacle of the EV is located in a front, driver's side, portion of the EV. In this example, the control circuitry can cause the mechanical arm 230/telescoping member 240 to position the cord dispenser 242 over (or otherwise within a specified distance of) the location of the charging receptacle of the EV. Additionally, the control circuity can cause the cord dispenser 242 to dispense a specified amount of the charging cord 214 so that the user can grab the charging cord 214 and insert the charging cord 214 into the charging receptacle of the EV.

In this example, the adjustment of the dispensing location of the charging cord 214 can be accomplished by moving the cord dispenser 242 to a target location that is over (or within a specified horizontal distance of) the location of the charging receptacle of the EV. For example, the control circuitry can extend (or retract) the telescoping member 240 until the cord dispenser 242 is at the target location. As needed, the control circuity can also adjust the locations of one or more of the extension member 232a and/or the extension member 232b to position the cord dispenser 242 at the target location. In some implementations, the target location can be a set of coordinates (e.g., x, y, z) that is specified based, at least in part, on the characteristics of the vehicle to be charged. The characteristics can include one or more of a location of the charging receptacle on the vehicle, orientation of the vehicle in a parking spot, physical dimensions of the vehicle (e.g., so the mechanical arm avoids the vehicle). Using these characteristics, the control circuitry can select the coordinates of the target location, as well as a movement path that will enable the target location to be reached without colliding with the vehicle or any other objects.

The characteristics can also include user preferences of a driver of the vehicle. For example, the characteristics can include a desired height of the charging port when the cord dispenser 242 has reached the target location. In a specific example, assume that the driver is 5'1" tall, and prefers the charging port to be made available at 5'3" above the ground when the target location near the charging receptacle is reached. In this example, the control circuitry can adjust one or more of the extension member 232a, the extension member 232b, and/or the telescoping member 240 to place the cord dispenser 242 at the target location. In some situations, the adjustment of the various members can result in the charging port being at the desired height (e.g., 5'3" in this case), but in other situations, placing the charging port at the desired height may also require dispensing or retracting a portion of the charging cord 214 until the charging port reaches the desired height.

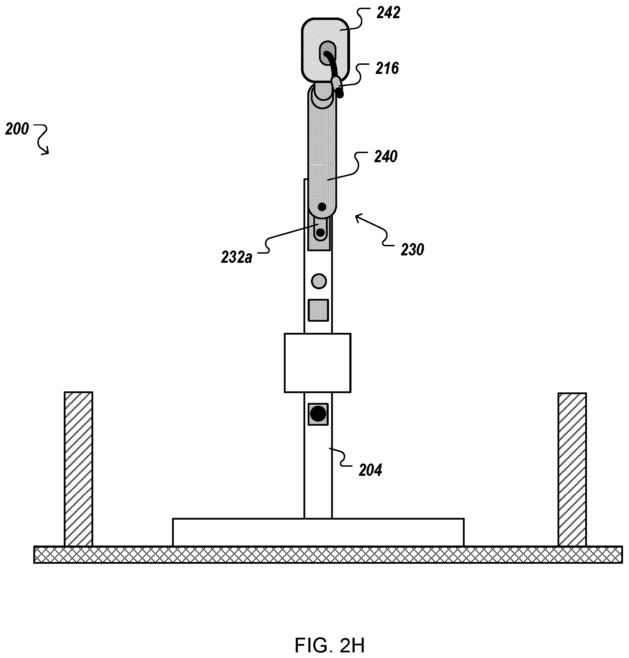

FIG. 2H is an illustration of the mechanical arm 230 having the telescoping member 240 in the stowed state. As shown, the mechanical arm 230 has been stowed in a vertical orientation. This orientation can be achieved, for example, by the control circuitry causing the extension member 232a to fold/pivot/retract to a vertical position, the extension member 232b (not visible) to fold/pivot/retract into a similar vertical position, and the telescoping member 240 to similarly fold/pivot/retract into a similar vertical position. Additionally, the control circuitry has caused the telescoping member 240 to retract telescoping portions into an outer shell of the portion of the telescoping member 240 that is visible in FIG. 2H. In this orientation, the cord dispenser 242 is elevated out of reach, which can make tampering with the charging port 216 more difficult, thereby preventing potential damage to the charging port 216. Of course, any of the stowed configurations discussed could be used to stow the mechanical arm 230 depicted by FIG. 2H.

Several techniques for supporting/suspending the charging cord 214 above ground have been discussed herein. However, other techniques for suspending the charging cord 214 can be used. For example, the charging port 216 could be raised using a telescoping system similar to that discussed above and then moved horizontally using cables, pulleys, mechanical arms, or other mechanisms.

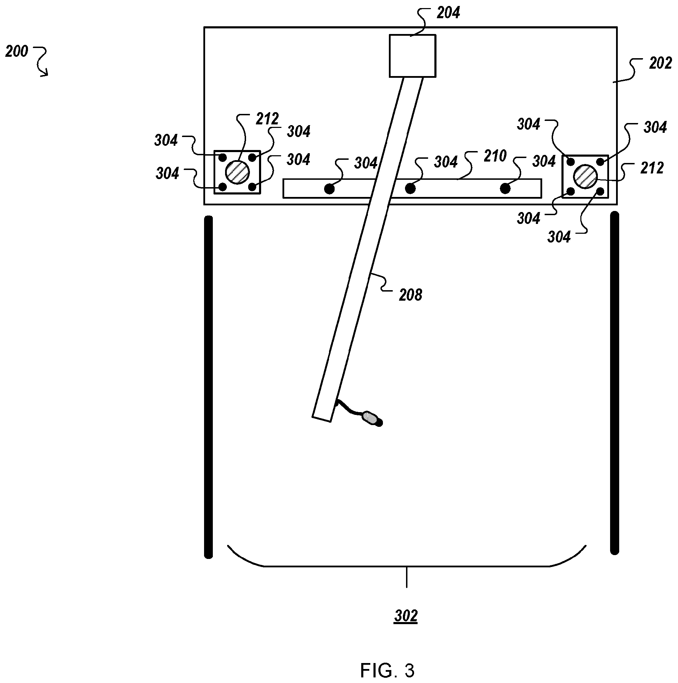

FIG. 3 is a top view of the drop and play electric vehicle charging system 200. The base plate 202 is shown as installed at the end of a parking space 302. In this view, the parking block 210 is shown as being attached to the base plate 202 using fasteners 304 (e.g., bolts). The bollards 212 are also shown as attached to the base plate 202 using fasteners 304. The bollards 212 and parking block 210 can also be secured to the base plate 202 with adhesive. In some implementations, the support column 204, boom 208, parking block 210 and bollards 212 are installed on the base plate 202 prior to being transported to the installation site, such that the pre-assembled system can be set in place and secured to the ground for a "drop and play" installation.

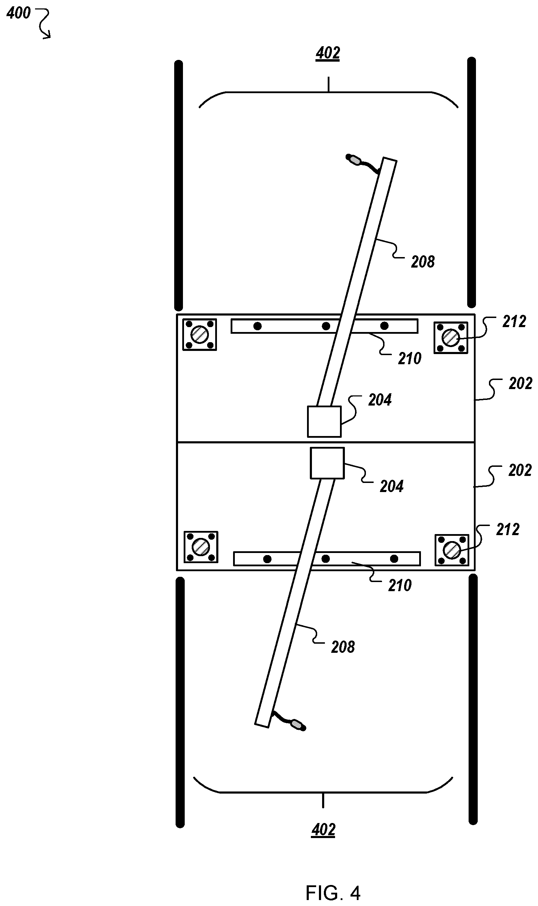

FIG. 4 is a top view of another drop and play electric vehicle charging system 400. In this system 400, two base plates 202 are installed between two parking spots 402. As indicated by the numbering, each base plate 202 has the same set of components installed as discussed above with refence to FIGs 2A-2C, and FIG.3. The discussion of those components is not repeated here.

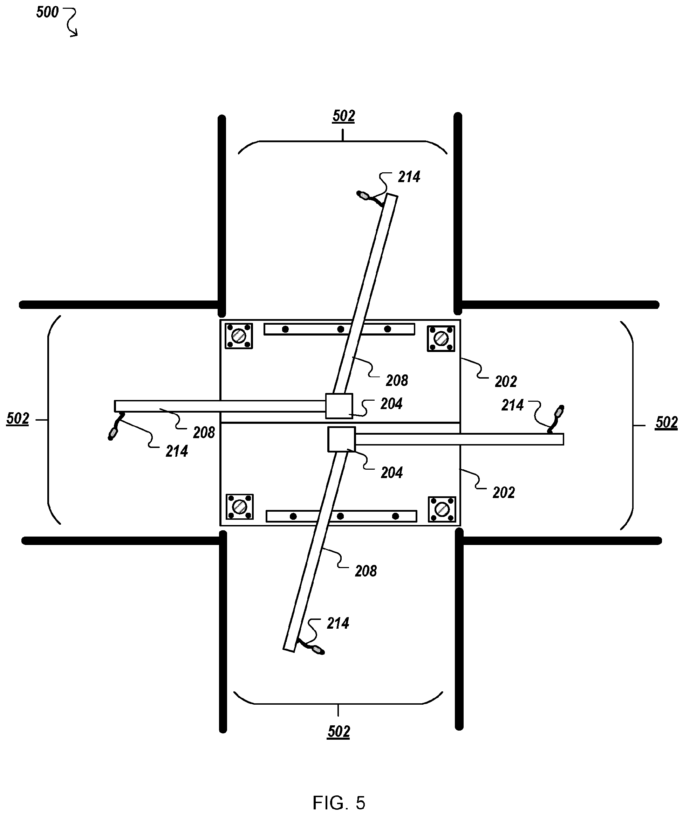

FIG. 5 is a top view of another drop and play electric vehicle charging system 500. This system 500 is configured to simultaneously charge four EVs in four parking spots 502. To prevent tripping hazards that can be caused by the charging cords 214, each of the support columns 204 includes two booms 208 so that each of the four charging cords 214 are suspended above the base plates 202 and the parking spaces 502.

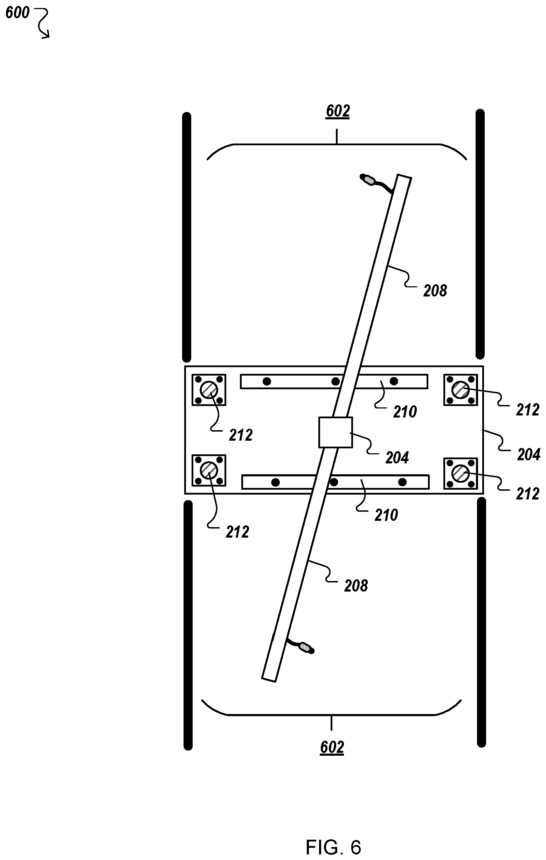

FIG. 6 is a top view of another drop and play electric vehicle charging system 600. The system 600 is similar to the systems previously discussed, but the system 600 has a single base plate 202, on which two parking blocks 210 and four bollards 212 have been installed, to provide a total of six parking barriers on the single base plate 202. A single support column 204 is installed on the base plate 202, and two booms 208 are attached to the support column 204. In this configuration, two EVs can be simultaneously charged in the two parking spots 602.

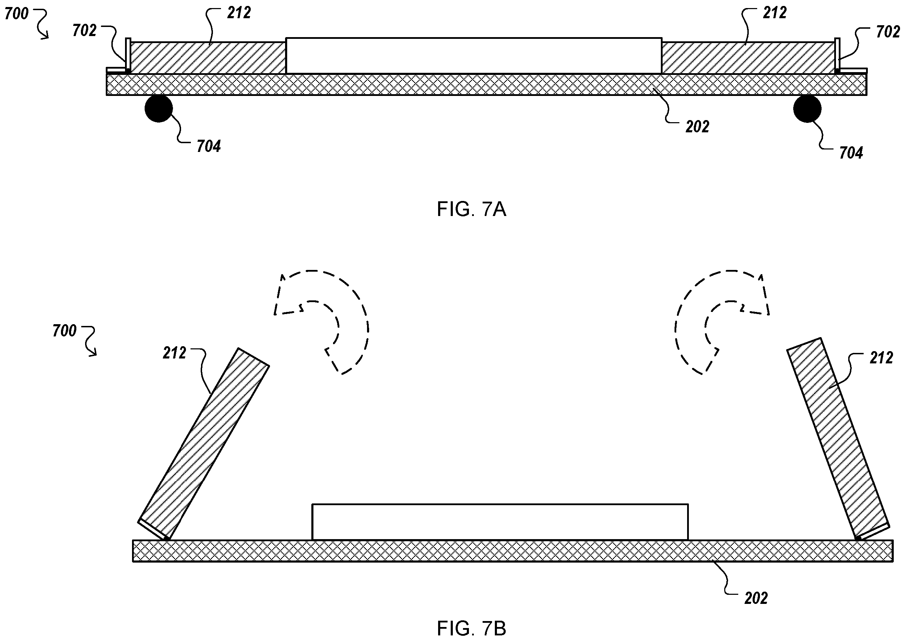

FIG. 7A is an illustration of an example drop and play electric vehicle charging system 700 in transport mode. In transport mode, the bollards 212 have been folded down to lie flat on the base plate 202. In this way, the vertical height of the system 700 is shorter than when the system 700 is in installation mode (e.g., with the bollards 212 in the upright position). To ease transition from transport mode to installation mode, the bollards 212 can be pivotably attached to the base plate 202. For example, a hinge 702 can be connected between the bottom of each bollard 212 and the base plate 202, which enables each bollard 212 to be rotated between a horizontal position to a vertical position.

The system 700 includes rolling components 704 (e.g., wheels or casters) that are configured to facilitate movement of the base plate on the ground thereby enabling the base plate 212 to be easily moved into an installation location. The rolling components 704 can be configured to be removed from the base plate 202 once the base plate 202 is at the installation location. For example, the rolling components 704 can be connected to a lever or another device that, when activated or otherwise manipulated, causes the rolling components 704 to release from the base plate 202 such that the bottom of the base plate 202 engages the ground directly and the rolling components to be removed.

FIG. 7B is an illustration of the example drop and play electric vehicle charging system 700 being transitioned into installation mode. As shown, the bollards 212 are being pivoted upright to transition from the transport mode to the installation mode. Once the bollards 212 are upright, they can be secured to the base plate 202 using, for example, fasteners or adhesives.

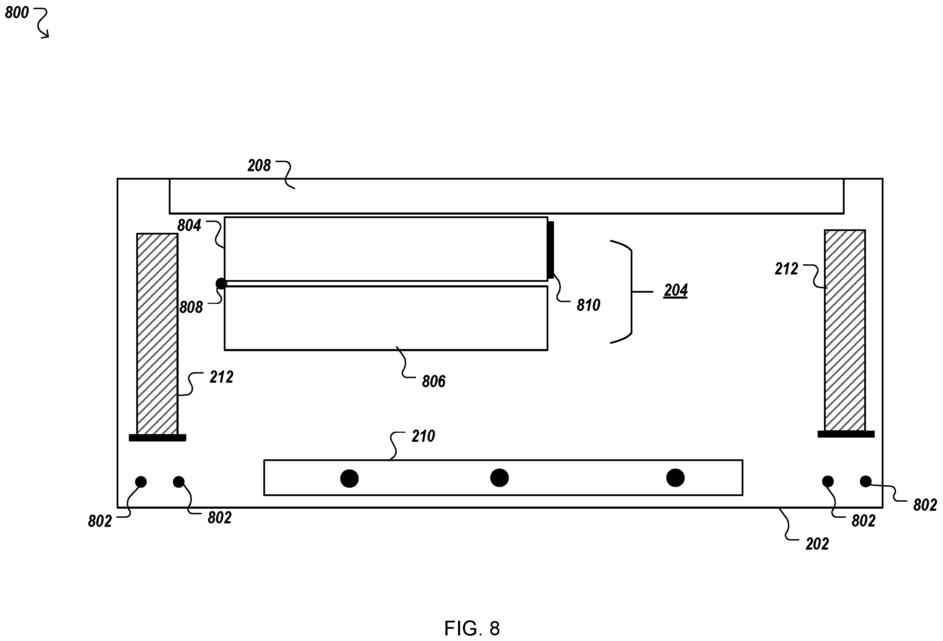

FIG. 8 is a top view of another example drop and play electric vehicle charging system 800 in transport mode. As shown, the base plate 202 has a parking block 210 pre-installed (e.g., using a set of fasteners), and two bollards 212 are pivotably attached to the base plate 202 so that the bollards 212 can lay horizontally on the base plate 202 while in the transport mode. When the system 800 is placed at the installation location, the bollards 212 can be pivoted into a vertical orientation as part of the transition to the installation mode. In some implementations, bollard installation points 802 can be pre-formed in the base plate 202 so that the bollards 212 can be easily secured into place. For example, the bollard installation points 802 can be pre-drilled holes through which bolts can be pre-installed, such that the bolts will pass through holes in a bottom of each bollard 212 and be secured with a nut.

In this example system 800, the support column 204 has two sections 804 and 806 that are pivotably attached to each other. For example, the section 804 can be attached to the section 806 using a hinge 808. The section 804 can also be pivotably attached to the base plate 202. For example, the section 804 can be attached to the base plate using a hinge 810. When the system 800 is in transport mode, the section 804 and 806 can both lay horizontally on the base plate 202. When transitioning to installation mode, the section 810 can be rotated to a vertical position/orientation, which will also rotate the section 806 to a vertical position. After rotating the section 804 up, the section 806 can then be rotated using the hinge 808 so that the section 806 is on top of the section 804. Once erected, the two sections 804 and 806 can be secured together using a pin, bolt, lock, or another device that is configured to prevent the section 806 from rotating back down. While the support column 204 is shown with two sections, the support column 204 can have more sections that are each pivotably connected to each other.

The boom 208 is shown in a horizontal orientation and laying at the edge of the base plate 208. In some implementations, the boom 208 can be separated from the support column 204 when the system 800 is in transport mode, and then connected to the support column 204 when the system 800 is being transitioned into installation mode (e.g., after erecting and securing the sections of the support column 204. In some implementations, the boom 208 can be pivotably attached to the section 806 in transport mode, and pivoted into place when the support column 204 is erected during the transition to installation mode.

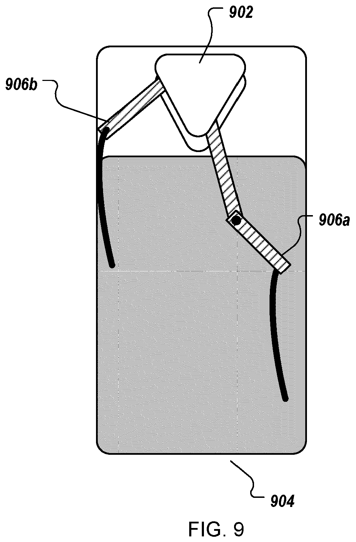

FIG. 9 is an illustration of an example charging cable support 902 mounted on top of a charging station 904. The charging cable support 902 is shown having two articulating arms 906a and 906b, which are together considered a multi-segment boom. Articulating arm 906b is shown in a partially stowed position in which the charging cable 908b is suspended above the ground at a location to the side of the charging station 904. Meanwhile, articulating arm 906a is shown in a deployed (or extended) position in which the charging cable 908a is suspended above the ground at a location in front of the charging station 904, thereby enabling the charging cable 908a to be located closer to an EV for charging the EV, while suspending the charging cable 908a above the ground to reduce tripping hazards potentially caused by the charging cable 908a during EV charging.

The articulating arms 908a and 908b are both configured to be moved between the stowed position and a deployed position (e.g., fully extended) so that the suspended charging cables 908a and 908b can be positioned relative to a charging port of an EV to be charged by the charging station 904. As shown, each of the articulating arms 906a and 906b include two segments that are pivotably connected to each other (e.g., using a hinge joint, ball joint, universal joint, a pivot bolt, or another appropriate connection device that allows for each of the two segments to move about the connection point). Additional segments can be added to the articulating arms 906a and 906b, as desired. Similarly, the cable support 902 is shown with two articulating arms 906a and 906b, but additional arms can be added as desired.

The articulating arms 906a and 906b are also pivotably connected to a body of the cable support to enable positioning of the articulating arms relative to the body of the cable support 902. For example, articulating arm 906a is shown pivoted into the deployed position, while the articulating arm 906b is shown pivoted into the body of the cable support 902. In some implementations, one or both of the articulating arms 906a and 906b can be configured to autonomously return to the stowed state when sufficient horizontal force is not applied to the articulating arms 906a and 906b (e.g., by pulling the charging cable and/or charging port). For example, one or more springs can be connected between the articulating arms 906a and 906b and/or the body of the cable support 902. In this way, the force exerted on the articulating arms 906a and 906b by the one or more springs will cause the articulating arms 906a and 906b to retract to the stowed state. In some implementations, the articulating arms 906a and 906b can be formed in a manner that results in an imbalanced moment, which causes the articulating arms 906a and 906b to move toward the stowed state when horizontal force toward the deployed state is not exerted on the articulating arms 906a and 906b. This also results in the articulating arms 906a and 906b autonomously moving toward the stowed state when an EV is not being charged.

The cable support can be attached to the charging station 904 in any suitable manner. For example, a base of the cable support 902 can be bolted to the charging station 904. The base of the cable support 902 can alternatively be secured to the charging station by way of an adhesive.

FIG. 9 is an illustration of the cable support 902. This illustration provides additional detail of the structure of the cable support 902. For example, this illustration shows the base 1002 of the cable support 902, and connection points 1004a-d, which are configured to secure the base 1002 to a charging station or another structure. The connection points 1004a-d can be holes/void defined in the base 1002 to facilitate bolting the base 1002 to a structure. The connection points 1004a-d can also take the form of keyed connection points configured to interface with a hole on the structure to which the base 1002 is connected. Other appropriate connection mechanisms can also be used.

The illustration of FIG. 10 also shows more detail of the body 1006 of the cable support 902. For example, the body 1006 has a triangle/wedge shape, and the two articulating arms 906a and 906b are connected at a smaller end 1008 of the triangle/wedge shape of the body 1006. Each side of the body 1006 has an arm stowage area 1010 defined therein. The arm stowage area 1010 can be a void defined between a top plate of the body 1006 and a bottom plate of the body 1006. FIG. 10 shows an example of how the arm stowage area is able to receive/stow the articulating arm 906b.

As shown in FIG. 10, the arm stowage area is configured to receive one section of the articulating arm 906b, while a second section of the articulating arm 906b remains extended away from the body 1006. In this way, the charging cord that is connected to the second section of the articulating arm 906b remains positioned away from the cable support 902 and any charging station/support to which the cable support 902 is attached.

FIGs. 11A and 11B are top views of another example drop and play electric vehicle charging system 1100. The drop and play electric vehicle charging system 1100 is similar to the drop and play electric vehicle charging system 300 discussed above with reference to FIG 3. For example, a base plate 1102 is shown as installed at the end of a parking space 1104. In this view, the parking block 1106 is shown as being attached to the base plate 1102 using fasteners 1108 (e.g., bolts), but could be attached using adhesive. The bollards 1110 are also shown as attached to the base plate 1102 using fasteners 1112, but could also be attached to the base plate 1102 using adhesive. In some implementations, the support column 1114, boom 1116, parking block 1106 and bollards 1110 are installed on the base plate 1102 prior to being transported to the installation site, such that the pre-assembled system can be set in place and secured to the ground for a "drop and play" installation.

As shown in FIGs. 11A and 11B, the boom 1116 is a segmented boom, having three segments that are pivotably attached to each other. In this way, the boom 1116 is configured to move between a stowed state, as shown in FIG. 11A, and an extended state, as shown in FIG. 11B. More specifically, when the charging system 11100 is not being used, the segments of the boom 1116 can fold/retract into the stowed state, thereby locating the charging port 1118 near the support column 1114. Meanwhile, when the charging system 1100 is being used (e.g., to charge an electric vehicle), the segments of the boom 1116 can extend away from the support column 1114, thereby positioning the charging port 1118 further from the support column 1114 (and closer to the electric vehicle).

The extension and retraction of the boom 1116 can be achieved by way of one or more springs connected between the segments of the boom 1116 and/or by designing the boom 1116 such that the center of gravity of the boom 1116 causes an imbalanced moment that results in the segments of the boom 1116 moving into the stored state (e.g., retracted state) when the charging system 1100 is not in use. More specifically, when the charging port 1118 is physically moved from the stored state (e.g., from being stowed in a cradle or slot at the support column 1114) to a location away from the support column 1114, the segments of the boom 1116 can pivot around connection points 1120 (e.g., bolts) that connect the segments of the boom 1116 to transition to the extended state, as shown in FIG. 11B. When the charging port 1118 has been removed from the electric vehicle or otherwise released, the segments of the boom 1116 can autonomously move from the extended state of FIG. 11B to the stowed state of FIG. 11A.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. An electric vehicle charging system comprising:
a base plate;
at least one parking barrier connected to the base plate;
an electric vehicle charging device; and
a boom configured to suspend a charging cable above the base plate.

2. The electric vehicle charging system of claim **1,** wherein the at least one parking barrier is pivotably connected to the base plate to facilitate a transition between transport mode and installation mode.

3. The electric vehicle charging system of claim 2, wherein:
the at least one parking barrier comprises a plurality of parking barriers;
a first parking barrier among the plurality of parking barriers is a bollard that is pivotally attached to the base plate; and
a second parking barrier among the plurality of parking barriers is a parking block.

4. The electric vehicle charging system of claim 3, wherein the parking block is attached to the base plate by a set of fasteners or by an adhesive.

5. The electric vehicle charging system of any preceding claim, further comprising a support column attached to the base plate, wherein the electric vehicle charging device is attached to the support column.

6. The electric vehicle charging system of claim 5, wherein the boom is attached to the support column.

7. The electric vehicle charging system of claim 6, wherein the boom is pivotably attached to the support column.

8. The electric vehicle charging system of claim 7, further comprising a charging cord that is electrically connected to the electric vehicle charging device.

9. The electric vehicle charging system of claim 8, wherein:
the support column has an access port defined therein; and
the charging cord is routed through the access port.

10. The electric vehicle charging system of claim 9, wherein:
the boom comprises a set of festoon trolleys; and
the charging cord is routed through the set of festoon trolleys.

11. The electric vehicle charging system of claim 9, wherein the support column has two or more sections that are pivotably attached to each other.

12. The electric vehicle charging system of claim 11, wherein a first section of the support column is pivotably attached to the base plate.

13. The electric vehicle charging system of claim 12, wherein the base plate comprises a set of rolling components configured to facilitate movement of the base plate on the ground.

14. The electric vehicle charging system of claim 13, wherein the support column comprises a charging port storage receptable configured to receive a charging port that is connected to the charging cord.

15. The electric vehicle charging system of any preceding claim, wherein the boom is configured to autonomously move toward a stowed state at rest.

16. The electric vehicle charging system of claim 15, wherein the boom is configured to autonomously move toward the stowed state at rest either by having one or more springs connected to at least one segment of the boom or by having a configuration that causes an imbalanced moment that biases one or more segments of the boom toward the stowed state.
